# EUROPÄISCHE PATENTANMELDUNG

(11) **EP 3 742 592 A1**
(43) Veröffentlichungstag der Anmeldung: **25.11.2020**
(21) Anmeldenummer: 19176480.2
(22) Anmeldetag: 24.05.2019
(51) Int. Cl.: H02K 13/00, H02K 13/02, H02K 7/00, H02K 11/21

(54) **LÄUFER FÜR EINE ROTIERENDE ELEKTRISCHE MASCHINE**

(71) Anmelder: Siemens Aktiengesellschaft, 80333 München (DE)
(72) Erfinder: Binder, Herbert, 94127 Neuburg (DE); Ecker, Helmut, 84347 Pfarrkirchen (DE); Gruber, Robert, 94099 Ruhstorf (DE); Memminger, Oliver, 94127 Neuburg a. Inn (DE); Schifferer, Klaus, 94152 Neuhaus am Inn (DE)

(57) **Zusammenfassung**

Die Erfindung betrifft einen Läufer (14) für eine rotierende elektrische Maschine (10), mit:
- einer Läuferwelle (40),
- einer an der Läuferwelle (40) Läuferwicklung (28),
- einem an einem axialen Ende (26) der Läuferwelle (40) angeordneten Schleifringkörper (22), wobei eine Stirnseite (32) des Schleifringkörpers (22) an einem der Läuferwicklung (28) gegenüberliegenden axialen Ende des Schleifringkörpers (22) ausgebildet ist, und
- einer Mitnehmereinheit (24) für einen Drehgeber (36), die an der Stirnseite (32) des Schleifringkörpers (22) und/oder am axialen Ende (26) der Läuferwelle (40) befestigt ist. Erfindungsgemäß weist der Schleifringkörper (22) Anschlussadapter (38) auf, die über die Stirnseite (32) des Schleifringkörpers (22) axial hinausragen und an denen Leitungsenden (42) der Läuferwicklung (28) angeschlossen sind, und wobei die Mitnehmereinheit (24) zumindest in einem Teilbereich (44), der in Richtung einer Drehachse (30) der Läuferwelle (40) auf gleicher Höhe mit den Anschlussadaptern (38) angeordnet ist, gegenüber den Anschlussadaptern (38) elektrisch isoliert ist.

## Beschreibung

Die Erfindung betrifft einen Läufer für eine rotierende elektrische Maschine mit einer Läuferwelle, einer an der Läuferwelle drehfest angeordneten Läuferwicklung, einem an einem axialen Ende der Läuferwelle angeordneten Schleifringkörper, wobei eine Stirnseite des Schleifringkörpers an einem der Läuferwicklung gegenüberliegenden axialen Ende des Schleifringkörpers ausgebildet ist, und einer Mitnehmereinheit für einen gegenüber dem Läufer drehfest angeordneten Drehgeber, die an der Stirnseite des Schleifringkörpers und/oder am axialen Ende der Läuferwelle befestigt ist. Darüber hinaus betrifft die Erfindung eine rotierende elektrische Maschine mit einem Ständer und einem in einer Öffnung des Ständers drehbar gelagerten Läufer.

Gattungsgemäße elektrische Maschinen sowie Läufer hierfür sind im Stand der Technik umfänglich bekannt, so dass es dem Grunde nach eines gesonderten druckschriftlichen Nachweises hierfür nicht bedarf. Bei einer rotierenden elektrischen Maschine ist üblicherweise ein Ständer als Stator vorgesehen, der bei einer als Innenläufer ausgebildeten rotierenden elektrischen Maschine in der Regel eine im Wesentlichen kreisförmige Öffnung zur Aufnahme eines als Rotors ausgebildeten Läufers bereitstellt. In der Öffnung ist der Läufer drehbar gelagert angeordnet, wobei zwischen dem Läufer und dem Ständer ein Luftspalt ausgebildet ist. Bei einer als Außenläufer ausgebildeten rotierenden elektrischen Maschine kann dies in dualer Weise umgekehrt vorgesehen sein.

Die rotierende elektrische Maschine ist eine Vorrichtung, die elektrische Energie in mechanische Energie, insbesondere Bewegungsenergie in einem Motorbetrieb und/oder mechanische Energie in eine elektrische Energie in einem Generatorbetrieb umformt. Bei der Bewegung handelt es sich in der Regel um eine Drehbewegung, die vom Läufer gegenüber dem Ständer ausgeführt. Der Ständer ist im Unterschied zum Läufer drehfest angeordnet, das heißt, bei der Drehbewegung handelt es sich um eine Drehbewegung des Läufers gegenüber dem Ständer.

Der Ständer und der Läufer sind mittels eines magnetischen Flusses im bestimmungsgemäßen Betrieb der rotierenden elektrischen Maschine verkettet, wodurch im Motorbetrieb die Kraftwirkung, nämlich das Drehmoment, bereitgestellt wird, die den Läufer gegenüber dem Ständer drehend antreibt. Im Generatorbetrieb wird hingegen dem Läufer zugeführte mechanische Energie, in Form einer Rotation unter Einwirkung eines Drehmoments in eine elektrische Energie umgewandelt. Zu diesem Zweck weisen der Ständer und der Läufer jeweils eine von einem elektrischen Strom durchflossene Wicklung auf. Im Ständer oder im Läufer kann die Wicklung auch durch einen Permanentmagneten ergänzt sein.

Rotierende elektrische Maschinen der gattungsgemäßen Art sind beispielsweise Drehfeldmaschinen, die an ein vorzugsweise mehrphasiges, insbesondere dreiphasiges elektrisches Energieversorgungsnetz angeschlossen sind, beispielsweise Asynchronmaschinen, insbesondere doppeltgespeiste Asynchronmaschinen, Synchronmaschinen, Synchronmaschinen mit Dämpferkäfig, oder dergleichen.

Um die Läuferwicklung im bestimmungsgemäßen Betrieb, das heißt, insbesondere wenn sich der Läufer gegenüber dem Ständer dreht, elektrisch kontaktieren zu können, ist in der Regel im Bereich eines axialen Endes der Läuferwelle ein Schleifringkörper angeordnet, der mit der Läuferwelle drehfest gekoppelt ist. Der Schleifringkörper weist in der Regel wenigstens zwei benachbart und elektrisch isoliert zueinander angeordnete umlaufende elektrisch leitfähige Flächen beziehungsweise Schleifringflächen - auch Schleifringe genannt - auf, die im bestimmungsgemäßen Betrieb beziehungsweise im bestimmungsgemäßen Aufbau der rotierenden elektrischen Maschine von entsprechenden Kontaktelementen kontaktiert werden können, sodass ein elektrischer Anschluss zur Läuferwicklung über den Schleifringkörper erreicht werden kann. Die Läuferwicklung ist zu diesem Zweck an den Schleifringkörper, insbesondere an dessen Schleifringflächen angeschlossen.

Bei vielen Anwendungen von elektrischen Maschinen ist es erforderlich beziehungsweise zweckmäßig, wenn eine Information bezüglich einer aktuellen Drehzahl des Läufers zur Verfügung steht. Zu diesem Zweck ist in der Regel ein Drehgeber vorgesehen, der vorzugsweise im Bereich des axialen Endes der Läuferwelle angeordnet ist. Der Drehgeber ist seinerseits drehfest gegenüber dem Läufer angeordnet, zu welchem Zweck er in der Regel mit einem Gehäuse der rotierenden elektrischen Maschine fest verbunden ist.

Im Bereich des axialen Endes der Läuferwelle beziehungsweise im Bereich einer Stirnseite des Schleifringkörpers, die gegenüberliegend zu einer der Läuferwicklung zugewandten Stirnseite des Schleifringkörpers ausgebildet ist, ist in der Regel eine Mitnehmereinheit angeordnet, die mit der Läuferwelle beziehungsweise der Stirnseite des Schleifringkörpers in Bezug auf die Drehung im bestimmungsgemäßen Betrieb der rotierenden elektrischen Maschine gekoppelt ist. Im montierten Zustand der rotierenden elektrischen Maschine, das heißt, wenn der Läufer gegenüber dem Ständer drehbar gelagert angeordnet ist, koppelt die Mitnehmereinheit den Drehgeber, weshalb der Drehgeber beispielsweise die aktuelle Drehzahl des Läufers unmittelbar erfassen kann. Der Drehgeber liefert dann ein entsprechendes Drehzahlsignal. Dies kann einer übergeordneten Steuerung zur Verfügung gestellt werden, die zum Steuern der rotierenden elektrischen Maschine dient. Neben der Drehzahl kann natürlich auch eine Drehstellung und/oder dergleichen mittels des Drehgebers erfasst und ein entsprechendes Signal abgegeben werden.

Die Mitnehmereinheit übernimmt somit die Funktion, die Drehung und/oder Drehstellung der Läuferwelle an den Drehgeber weiterzugeben beziehungsweise diesen rotatorisch zu koppeln. Ein solcher Aufbau ist zum Beispiel aus der WO 2010/048956 A1 bekannt.

Auch wenn sich die Lehre der WO 2010/048956 A1 dem Grunde nach bewährt hat, so erweist sie sich insofern als nachteilig, als dass eine Reduzierung der Abmessungen in axialer Richtung der Läuferwelle mit dieser Lehre nicht möglich ist. Aus der WO 2010/048956 A1 ist ferner nicht ersichtlich, wie der Schleifringkörper an die Läuferwicklung angeschlossen werden kann. Insbesondere weil jedoch aus Gründen der elektrischen Sicherheit Kriech- und Luftstrecken einzuhalten sind, kann mit der Lehre der WO 2010/048956 A1 keine Reduktion der Abmessungen in Richtung der axialen Erstreckung der Läuferwelle erreicht werden. Die für die elektrische Sicherheit einzuhaltenden Werte bezüglich der Kriech- und Luftstrecken unterliegen der Normung, so zum Beispiel die EN 60079-7 oder dergleichen.

Der Erfindung liegt die Aufgabe zugrunde, die Integration der Mitnehmereinheit am axialen Ende der Läuferwelle zu verbessern, sodass eine Reduzierung von Abmessungen insbesondere in Bezug auf eine Längserstreckung der Läuferwelle erreicht werden kann.

Als Lösung werden mit der Erfindung ein Läufer sowie eine rotierende elektrische Maschine gemäß den unabhängigen Ansprüchen vorgeschlagen.

Vorteilhafte Weiterbildungen ergeben sich anhand von Merkmalen der abhängigen Ansprüche.

Bezüglich eines gattungsgemäßen Läufers wird mit der Erfindung insbesondere vorgeschlagen, dass der Schleifringkörper Anschlussadapter aufweist, die über die Stirnseite des Schleifringkörpers axial hinausragen und an denen Leitungsenden der Läuferwicklung angeschlossen sind, und wobei die Mitnehmereinheit zumindest in einem Teilbereich, der in Richtung einer Drehachse der Läuferwelle auf gleicher Höhe mit den Anschlussadaptern angeordnet ist, gegenüber den Anschlussadaptern elektrisch isoliert ist.

Bezüglich einer gattungsgemäßen rotierenden elektrischen Maschine wird insbesondere vorgeschlagen, dass der Läufer gemäß der Erfindung ausgebildet ist.

Die Erfindung basiert unter anderem auf dem Gedanken, dass die Integration der Mitnehmereinheit am Läufer verbessert werden kann, wenn die Anschlussadapter über die Stirnseite des Schleifringkörpers axial hinausragen und zugleich die Mitnehmereinheit in dem Teilbereich angeordnet ist, sodass in Bezug auf die axiale Höhe eine verbesserte Nutzung erreicht werden kann, die dazu genutzt werden kann, die axiale Erstreckung des Läufers insgesamt zu reduzieren. Damit diese Integration erreicht werden kann, sieht die Erfindung vor, dass die Anschlussadapter gegenüber der Mitnehmereinheit elektrisch isoliert sind. Hierdurch kann nämlich erreicht werden, dass die tatsächlich vorhandenen Kriech- und Luftstrecken reduziert werden können, sodass die Anforderungen hinsichtlich der elektrischen Sicherheit erreicht werden können. Dies berücksichtigt, dass während des bestimmungsgemäßen Betriebs der rotierenden elektrischen Maschine die Läuferwicklung mit teilweise großen elektrischen Spannungen beaufschlagt sein kann, insbesondere auch in Bezug auf ein Bezugspotenzial der elektrischen Maschine, beispielsweise ein Massepotenzial, ein Erdpotenzial oder dergleichen.

Zugleich erlaubt es die Erfindung, den Läufer auf einfache und kostengünstige Weise herzustellen, weil nämlich der stirnseitig durch die Anschlussadapter gebildete Anschlussbereich für die Läuferwicklung auch nach einer Montage des Läufers beziehungsweise der rotierenden elektrischen Maschine zugänglich bleiben kann, wodurch insbesondere auch Wartungsarbeiten, beispielsweise am Schleifringkörper oder an seinen Schleifringflächen oder dergleichen weiterhin auf einfache Weise realisiert werden können. Zugleich kann in dem Teilbereich die Mitnehmereinheit angeordnet, insbesondere befestigt, werden, sodass die Mitnehmereinheit und die Anschlussadapter den Teilbereich zumindest teilweise gemeinsam nutzen. Insgesamt kann auf diese Weise eine verbesserte Konstruktion mit reduzierten Abmessungen sowie auch eine verbesserte Wartungsmöglichkeit erreicht werden.

Der Schleifringkörper ist ein Bauteil, welches dazu dient, im bestimmungsgemäßen Betrieb der rotierenden elektrischen Maschine eine elektrische Verbindung des Läufers, insbesondere der Läuferwicklung, mit einer läuferexternen Energiequelle beziehungsweise Energiesenke bereitzustellen. Zu diesem Zweck stellt der Schleifringkörper wenigstens zwei elektrisch voneinander isoliert angeordnete, in Umfangsrichtung umlaufende Schleifringflächen bereit, die durch entsprechende, vorzugsweise gegenüber dem Ständer drehfest angeordnete, Kontaktelemente der elektrischen Maschine, beispielsweise Bürsten oder dergleichen, elektrisch kontaktiert werden können, um auf diese Weise den elektrischen Anschluss herstellen zu können. Der Schleifringkörper umfasst in der Regel ein elektrisch isolierendes Körperelement, auf dem die Schleifringelemente angeordnet oder ausgebildet sind. Der Schleifringkörper kann eine Öffnung, insbesondere eine Durchgangsöffnung, aufweisen, die es erlaubt, die Läuferwelle durch den Schleifringkörper hindurchzuführen. Vorzugsweise kann hiermit zugleich auch eine drehfeste Verbindung zwischen der Läuferwelle und dem Schleifringkörper erreicht werden. Der Schleifringkörper ist vorzugsweise am axialen Ende der Läuferwelle angeordnet beziehungsweise befestigt. Es kann aber auch vorgesehen sein, dass der Schleifringkörper selbst am axialen Ende der Läuferwelle befestigt ist. Natürlich kann auch vorgesehen sein, dass der Schleifringkörper eine Sackbohrung aufweist, die dazu dient, das axiale Ende der Läuferwelle aufzunehmen.

Der Schleifringkörper weist in der Regel in axialer Richtung zu einer Drehachse des Läufers zwei gegenüberliegende Stirnseiten auf, von denen eine der Stirnseiten der Läuferwicklung gegenüberliegt und die andere Stirnseite von der Läuferwicklung abgewandt ausgebildet ist. An dieser der Läuferwicklung zugewandten Stirnseite gegenüberliegenden, axialen Ende des Schleifringkörpers ausgebildeten Stirnseite ragen die Anschlussadapter axial hinaus, sodass der elektrische Anschluss der Leitungsenden der Läuferwicklung an den Anschlussadaptern auf einfache Weise ausgeführt werden kann. Zu diesem Zweck kann vorgesehen sein, dass die Leitungsenden durch eine axiale Öffnung der Läuferwelle und/oder des Schleifringkörpers hindurchgeführt sind. Besonders vorteilhaft erweist es sich, wenn die Läuferwelle als Hohlwelle ausgebildet ist und die Leitungsenden durch die Hohlwelle hindurch zu derem axialen Ende, vorzugsweise zu den Anschlussadaptern geführt sind. Dadurch können nicht nur eine einfache Montage und ein einfacher Aufbau erreicht werden, sondern die Leitungsenden können dadurch im bestimmungsgemäßen Betrieb der rotierenden elektrischen Maschine geschützt angeordnet sein. Insbesondere können sie durch die Läuferwelle in Bezug auf Fliehkräfte gestützt werden.

Die Mitnehmereinheit ist an der Stirnseite des Schleifringkörpers und/oder am axialen Ende der Läuferwelle befestigt. Dadurch führt die Mitnehmereinheit die gleiche Rotation aus wie die Läuferwelle beziehungsweise der Schleifringkörper beziehungsweise der Läufer. Die Befestigung kann dadurch erreicht werden, dass die Mitnehmereinheit mittels Befestigungselementen an der Stirnseite des Schleifringkörpers und/oder am axialen Ende der Läuferwelle befestigt ist. Die Verbindung kann mit einer Schraubverbindung, einer Nietverbindung, einer Klebverbindung und/oder dergleichen ausgebildet sein.

Die Mitnehmereinheit ist üblicherweise aus einem Metall gebildet, damit es der im bestimmungsgemäßen Betrieb auftretenden hohen Temperaturbeanspruchung gut standhalten kann. Dem Grunde nach kann sie jedoch auch aus einem Kunststoff, einem Keramikwerkstoff, einem Verbundwerkstoff und/oder dergleichen gebildet sein.

Um nun zu ermöglichen, dass die Mitnehmereinheit zumindest in dem Teilbereich, der in Richtung der Drehachse der Läuferwicklung auf gleicher Höhe mit den Anschlussadaptern angeordnet ist, angeordnet werden kann, ist vorgesehen, dass die Mitnehmereinheit gegenüber den Anschlussadaptern elektrisch isoliert ist. Dadurch wird die Möglichkeit geschaffen, dass der Teilbereich sowohl von der Mitnehmereinheit als auch von den Anschlussadaptern gleichzeitig genutzt werden kann. Die elektrische Isolation kann durch einen elektrisch isolierenden Werkstoff geeigneter Art bereitgestellt werden, beispielsweise indem ein elektrisch isolierender Werkstoff zwischen den Anschlussadaptern und der Mitnehmereinheit angeordnet ist oder dergleichen. Der elektrisch isolierende Werkstoff kann ein Kunststoff, insbesondere ein faserverstärkter Kunststoff, ein Keramikwerkstoff, insbesondere ein gesinterter Keramikwerkstoff, Kombinationen hiervon und/oder dergleichen sein. Der elektrisch isolierende Werkstoff kann aber auch zumindest teilweise durch die Anschlussadapter und/oder die Mitnehmereinheit bereitgestellt sein. Auch Kombinationen hiervon können vorgesehen sein.

Durch den Teilbereich wird also in axialer Richtung der Drehachse der Läuferwelle ein Überlappungsbereich bereitgestellt, in dem sowohl zumindest teilweise die Mitnehmereinheit als auch zumindest teilweise die Anschlussadapter angeordnet sind. Der Teilbereich bezeichnet also insbesondere einen sich in axialer Richtung der Läuferwelle erstreckenden Bereich der gemeinsamen Anordnung der Mitnehmereinheit oder zumindest Teilen hiervon einerseits sowie der Anschlussadapter oder zumindest Teilen hiervon andererseits. Der Begriff Höhe bezieht sich daher auf die axiale Richtung der Drehachse der Läuferwelle.

Die Anschlussadapter sowie auch die elektrischen Leitungen weisen zum Zwecke der guten Stromführung eine gute elektrische Leitfähigkeit auf und können zum Beispiel aus einem Werkstoff insbesondere einem Metall gebildet sein, welches eine hohe elektrische Leitfähigkeit bereitstellt, beispielsweise Kupfer, Aluminium, Silber, Legierungen hiervon und/oder dergleichen. Zumindest die Leitungsenden weisen zudem vorzugsweise eine geeignete elektrische Isolation auf, die einerseits eine elektrische Isolation gegenüber anderen Teilen im bestimmungsgemäßen Betrieb erlaubt und andrerseits endseitig zugleich jedoch so ausgebildet sein kann, dass eine gute elektrisch leitfähige Kontaktierung der Leitungsenden mit den Anschlussadaptern im angeschlossenen Zustand erreicht werden kann. Die Verbindung zwischen dem Anschlussadapter und den Leitungsenden kann beispielsweise durch eine Klemmverbindung, eine Schraubverbindung, aber auch eine Lötverbindung, eine Schweißverbindung und/oder dergleichen sein. Vorzugsweise ist die Verbindung lösbar ausgebildet, um die Wartung des Läufers zu erleichtern.

Durch die Erfindung ist es möglich, die Mitnehmereinheit und die Anschlussadapter sowie die Leitungsenden in einem gemeinsamen Bereich, nämlich den Teilbereich, anzuordnen und zugleich die Anforderungen hinsichtlich Kriech- und Luftstrecken einzuhalten. Diese Anordnung erlaubt es, die axiale Erstreckung des Läufers zu reduzieren, wodurch die Baugröße der elektrischen Maschine insgesamt reduziert werden kann.

Es wird ferner vorgeschlagen, dass der Läufer einen Fliehkraftstützring mit einer Durchgangsöffnung aufweist, der an der Stirnseite des Schleifringkörpers derart angeordnet ist, dass die Anschlussadapter und die Mitnehmereinheit zumindest teilweise in der Durchgangsöffnung des Fliehkraftstützrings angeordnet sind. Besonders vorteilhaft kann dadurch erreicht werden, dass die Anschlussadapter durch den Fliehkraftstützring in Bezug auf Fliehkräfte bei einer Drehbewegung des Läufers gestützt werden können. Der Fliehkraftstützring ermöglicht es somit, die Beanspruchung durch Fliehkräfte in einem durch die Anschlussadapter bereitgestellten Anschlussbereich zu reduzieren, wodurch die Zuverlässigkeit und die Dauerhaftigkeit des Läufers verbessert werden können. Zugleich kann der Fliehkraftstützring eine Schutzfunktion bereitstellen, die die in seiner Durchgangsöffnung angeordneten Elemente vor von außen einwirkenden mechanischen Beanspruchungen, beispielsweise Staub und/oder dergleichen zu schützen vermag. Die grundlegende Funktion und ein möglicher Aufbau für einen Fliehkraftstützring ist zum Beispiel offenbart in der WO 2016/165939 A1.

Der Fliehkraftstützring ist vorzugsweise aus einem geeigneten Werkstoff, zum Beispiel einem keramischen Werkstoff oder auch einem Kunststoff oder auch einem Verbundwerkstoff, Kombinationen hiervon oder dergleichen, gebildet. Insgesamt kann durch den Fliehkraftstützring eine weitere Verbesserung der Erfindung erreicht werden. Eine axiale Erstreckung des Fliehkraftstützrings ist vorzugsweise derart gewählt, dass das Anschließen der Leitungsenden an die Anschlussadapter ermöglicht ist, wobei die Anschlussadapter jedoch zuverlässig gestützt sind. Der Fliehkraftstützring kann mittels einer mechanischen und/oder auch stoffschlüssigen Verbindung mit der Stirnseite des Schleifringkörpers verbunden sein. Die Verbindung kann beispielsweise mechanisch mittels Schrauben, Nieten oder dergleichen realisiert sein. Eine stoffschlüssige Verbindung kann zum Beispiel mittels Kleben, Schweißen oder anderer Verbindungsverfahren realisiert sein. Natürlich können auch Kombinationen hiervon vorgesehen sein.

Ferner wird vorgeschlagen, dass die Mitnehmereinheit zumindest teilweise einen elektrisch isolierenden Werkstoff aufweist. Dadurch kann durch die Mitnehmereinheit selbst zumindest ein Teil der elektrischen Isolation bereitgestellt sein. Besonders vorteilhaft stellt die Mitnehmereinheit den elektrisch isolierenden Werkstoff zumindest im Teilbereich bereit. Zu diesem Zweck kann die Mitnehmereinheit zumindest teilweise aus dem elektrisch isolierenden Werkstoff gebildet sein. Der elektrisch isolierende Werkstoff kann hier ein Kunststoff, ein geeigneter keramischer Werkstoff, aber auch ein Verbundwerkstoff und/oder dergleichen sein. Vorzugsweise ist der elektrisch isolierende Werkstoff entsprechend der thermischen Anforderungen im bestimmungsgemäßen Betrieb der elektrischen Maschine gewählt.

Darüber hinaus wird vorgeschlagen, dass die Mitnehmereinheit eine Halteplatte mit einem Mitnehmerzapfen zum Verbinden mit dem Drehgeber und wenigstens einen Befestigungsbolzen zum Befestigen an der Stirnseite des Schleifringkörpers und/oder am axialen Ende der Läuferwelle aufweist, wobei die Halteplatte und der wenigstens eine Befestigungsbolzen elektrisch isoliert ausgebildet sind. Diese Weiterbildung berücksichtigt, dass insbesondere die Halteplatte und/oder der Befestigungsbolzen im Teilbereich angeordnet sein können, weshalb diese Teile bevorzugt zum Bereitstellen der erforderlichen elektrischen Isolation genutzt werden können. An der Halteplatte und/oder dem wenigstens einen Befestigungsbolzen kann zu diesem Zweck eine Beschichtung des elektrisch isolierenden Werkstoffs angeordnet, insbesondere ausgebildet sein.

Die Mitnehmereinheit braucht natürlich nicht nur einen einzigen Befestigungsbolzen aufzuweisen. Es können auch zwei, drei oder noch mehr Befestigungsbolzen vorgesehen werden, die vorzugsweise im Wesentlichen gleich ausgebildet sein können. Dadurch kann die Stabilität der Mitnehmereinheit insgesamt weiter verbessert werden. Die Mitnehmereinheit kann mittels der Befestigungsbolzen beispielsweise mittels einer Schraubbefestigung, einer Klebbefestigung, einer Schweißbefestigung und/oder dergleichen befestigt sein. Die Befestigungsbolzen können lösbar mit der Halteplatte verbunden sein, zum Beispiel mittels einer Schraubbefestigung oder dergleichen. Darüber hinaus können die Befestigungsbolzen mit der Halteplatte natürlich auch nicht lösbar verbunden sein, zum Beispiel mittels einer Klebverbindung, einer Schweißverbindung und/oder dergleichen.

Vorzugsweise bildet der elektrisch isolierende Werkstoff zumindest teilweise eine Beschichtung der Mitnehmereinheit. Die Beschichtung ist besonders vorteilhaft in einem Bereich der Mitnehmereinheit ausgebildet, der im montierten Zustand im Teilbereich angeordnet ist, sodass die elektrische Isolation hergestellt oder zumindest jedoch unterstützt werden kann. Dies erlaubt es, die Mitnehmereinheit auf einfache Weise für den Einsatz der Erfindung zu ertüchtigen. Es braucht also für die Erfindung nicht unbedingt eine neue Mitnehmereinheit konstruiert zu werden. Die Beschichtung kann durch ein Harz, einen Lack, Kombinationen hiervon und/oder dergleichen gebildet sein, die vorzugsweise der Temperaturbeanspruchung im bestimmungsgemäßen Betrieb der rotierenden elektrischen Maschine hinreichend standhalten. Eine solche Beschichtung kann zum Beispiel aus einem Teflon oder dergleichen gebildet sein. Darüber hinaus kann die Beschichtung natürlich auch durch Aufbringen eines Isolationswerkstoffs gebildet sein, beispielsweise durch Aufdrucken, Aufsprühen, Folieren oder dergleichen. Der elektrisch isolierende Werkstoff kann also auch durch eine Folie gebildet sein, die eine Beschichtung der Mitnehmereinheit auszubilden vermag.

Vorzugsweise sind die Halteplatte und/oder der wenigstens eine Befestigungsbolzen aus einem elektrisch isolierenden Werkstoff gebildet. Dadurch kann die elektrische Isolation auf einfache Weise durch die Mitnehmereinheit realisiert werden. Vorzugsweise kann vorgesehen sein, dass die Halteplatte und/oder der Befestigungsbolzen mit einer entsprechenden elektrisch isolierenden Beschichtung versehen sind. Die elektrische Beschichtung kann so ausgestaltet sein, dass die Kriech- und Luftstrecken, die für den bestimmungsgemäßen Betrieb einzuhalten sind, realisiert werden. Vorzugsweise weist die Beschichtung eine entsprechende, geeignete Spannungsfestigkeit auf, wobei insbesondere eine Schichtdicke der Beschichtung abhängig von Werkstoffeigenschaften entsprechend ausgewählt sein kann.

Gemäß einer Weiterbildung wird vorgeschlagen, dass die Halteplatte und/oder der wenigstens eine Befestigungsbolzen aus einem elektrisch isolierenden Werkstoff gebildet sind. Der Befestigungsbolzen beziehungsweise gegebenenfalls auch die Halteplatte können somit aufgrund des verwendeten Werkstoffs bereits elektrisch isolierend ausgebildet sein. In einem solchen Fall bedarf es natürlich nicht einer separaten elektrischen Isolierung. Insbesondere bedarf es keiner zusätzlichen Beschichtung, um die elektrische Isolation in vorgegebener Weise zu realisieren. Dadurch kann Aufwand eingespart werden. Darüber hinaus eignet sich diese Ausgestaltung insbesondere auch dann, wenn im bestimmungsgemäßen Betrieb, beispielsweise bei Wartungsarbeiten oder dergleichen, Beschichtungen beschädigt werden können, beispielsweise wenn die Mitnehmereinheit an dem Schleifringkörper und/oder am axialen Ende der Läuferwelle montiert wird, die Leitungsenden an die Anschlussadapter montiert werden oder auch demontiert werden oder dergleichen. Besteht die Halteplatte oder auch der wenigstens eine Befestigungsbolzen aus einem elektrisch isolierenden Werkstoff, brauchen Beschädigungen, die bei derartigen Arbeiten auftreten können, nicht zur Beschädigung der elektrischen Isolation führen. Dadurch kann die Zuverlässigkeit nicht nur im bestimmungsgemäßen Betrieb, sondern insbesondere auch im Rahmen einer Wartung oder dergleichen reduziert werden.

Eine vorteilhafte Weiterbildung sieht vor, dass die Halteplatte und/oder der wenigstens eine Befestigungsbolzen mit einem elektrisch isolierenden Werkstoff beschichtet sind. Diese Weiterbildung erweist sich insbesondere dann als vorteilhaft, wenn aus konstruktiven Gründen die Halteplatte und/oder der wenigstens eine Befestigungsbolzen aus einem elektrisch leitfähigen Werkstoff, beispielsweise einem Metall oder dergleichen gebildet sein soll. Durch die Beschichtung kann dann die elektrische Isolation zumindest teilweise realisiert sein.

Gemäß einer Weiterbildung wird vorgeschlagen, dass die Anschlussadapter eine elektrische Isolierung aufweisen. Dadurch kann die erforderliche elektrische Isolation auch zumindest teilweise durch die Anschlussadapter beziehungsweise deren elektrische Isolierung realisiert sein. Die elektrische Isolation kann zum Beispiel durch eine Beschichtung gebildet sein, die nach einem Anschließen auf den Anschlussadapter und das an ihm angeschlossene Leitungsende aufgebracht werden. Die Beschichtung kann zum Beispiel durch einen Lack, ein Harz, eine Oxydschicht und/oder dergleichen gebildet sein. Vorzugsweise ist die elektrische Isolierung der Anschlussadapter so ausgebildet, dass sie für sich genommen ausreicht, um die elektrische Isolation, die erforderlich ist, bereitzustellen.

Besonders vorteilhaft erweist es sich, wenn die elektrische Isolierung zumindest teilweise durch eine Hülse aus einem elektrisch isolierenden Werkstoff gebildet ist. Die Hülse kann auf den Anschlussadapter, an dem das jeweilige Leitungsende angeschlossen ist, nach einem Anschließen des jeweiligen Leitungsendes aufgesteckt werden. Die Hülse kann vorzugsweise endseitig geschlossen sein und stellt eine Sacköffnung bereit, sodass die Hülse auf einfache Weise auf den Anschlussadapter gesteckt werden kann. Vorzugsweise sind Verbindungsmittel vorgesehen, die es erlauben, die Hülse mit dem Anschlussadapter fest zu verbinden, beispielsweise durch eine Rastverbindung, eine Verriegelungsverbindung und/oder dergleichen, sodass die Hülse für den bestimmungsgemäßen Betrieb der rotierenden elektrischen Maschine am Anschlussadapter festgelegt ist.

Die Hülse kann zum Beispiel aus einem geeigneten Kunststoff, aus einem geeigneten Keramikwerkstoff, aus einem geeigneten Verbundwerkstoff und/oder dergleichen gebildet sein. Besonders vorteilhaft kann die Hülse natürlich auch durch einen geeigneten Schrumpfschlauch gebildet sein, der nach dem Aufstecken auf die Anschlussadapter mittels einer geeigneten, insbesondere thermischen Behandlung auf den Anschlussadapter und das mit diesem verbundene Leitungsende aufgeschrumpft werden kann. Dadurch kann eine besonders einfache und zuverlässige Verbindung der Hülse mit dem Anschlussadapter erreicht werden.

Die Isolierung braucht nicht nur allein durch die Mitnehmereinheit oder die Anschlussadapter bereitgestellt zu sein, sondern es kann auch eine Kombination hiervon vorgesehen sein. Dadurch kann zudem eine Redundanz hinsichtlich der elektrischen Isolation erreicht werden, sodass eine besonders große Zuverlässigkeit im bestimmungsgemäßen Betrieb und auch bei der Wartung der rotierenden elektrischen Maschine, insbesondere des Läufers, erreicht werden kann.

Die für den erfindungsgemäßen Läufer angegebenen Vorteile und Wirkungen gelten natürlich gleichermaßen auch für die mit dem erfindungsgemäßen Läufer ausgerüstete rotierende elektrische Maschine. Auch wenn vorliegend als rotierende elektrische Maschine auf eine als Innenläufer ausgebildete rotierende elektrische Maschine abgestellt worden ist, gelten die entsprechenden Vorteile und Wirkungen natürlich gleichermaßen für eine rotierende elektrische Maschine, die als Außenläufer ausgebildet ist. Die entsprechenden Anpassungen in Bezug auf den Ständer und den Läufer der rotierenden elektrischen Maschine sind für den Fachmann leicht einzusehen, sodass er den Erfindungsgedanken auch bei einer als Außenläufer ausgebildeten rotierenden elektrischen Maschine auf einfache Weise zu realisieren vermag.

Weitere Vorteile und Merkmale ergeben sich aus der folgenden Beschreibung von Ausführungsbeispielen anhand der Figuren. In den Figuren bezeichnen gleiche Bezugszeichen gleiche Merkmale und Funktionen.

Es zeigen:
- FIG 1: in einer schematischen Schnittdarstellung eine doppelt gespeiste Asynchronmaschine,
- FIG 2: eine schematische Schnittdarstellung einer an einem Wellenende eines Läufers der Asynchronmaschine gemäß FIG 1 angeordneten Mitnehmereinheit,
- FIG 3: eine schematische Schnittdarstellung für eine weitere Ausgestaltung einer doppelt gespeisten Asynchronmaschine mit einem an einem Wellenende einer Läuferwelle angeordneten Lüfter,
- FIG 4: eine schematisch perspektivische Darstellung eines am axialen Ende der Läuferwelle der elektrischen Maschine gemäß FIG 1 angeordneten Schleifringkörpers mit einem im Bereich eines Anschlusses der Läuferwicklung an den Schleifringkörper angeordneten Mitnehmereinheit,
- FIG 5: eine schematisch perspektivische Darstellung wie FIG 4, bei der Leitungsenden der Wicklung und die Mitnehmereinheit nicht dargestellt sind,
- FIG 6: eine schematische perspektivische Darstellung wie FIG 4 jedoch ohne den Schleifringkörper und den Mitnehmer,
- FIG 7: eine schematisch perspektivische Darstellung der Mitnehmereinheit gemäß FIG 4,
- FIG 8: eine schematisch perspektivische Darstellung eines Ausschnitts der Mitnehmereinheit gemäß FIG 7 in einer Draufsicht auf einen Befestigungsbereich der Mitnehmereinheit am axialen Ende einer Läuferwelle gemäß FIG 1,
- FIG 9: in einer schematischen Draufsicht einen Ausschnitt auf das axiale Wellenende der Anordnung gemäß FIG 4,
- FIG 10: eine schematische Schnittdarstellung wie FIG 2 jedoch mit einer Mitnehmereinheit gemäß FIG 7,
- FIG 11: eine schematische Schnittdarstellung wie FIG 2, bei der jedoch Anschlussadapter eine Isolierhülse als elektrische Isolation aufweisen und
- FIG 12: eine schematisch perspektivische Ansicht des Endes der Läuferwelle mit der Schleifringeinheit gemäß FIG 11.

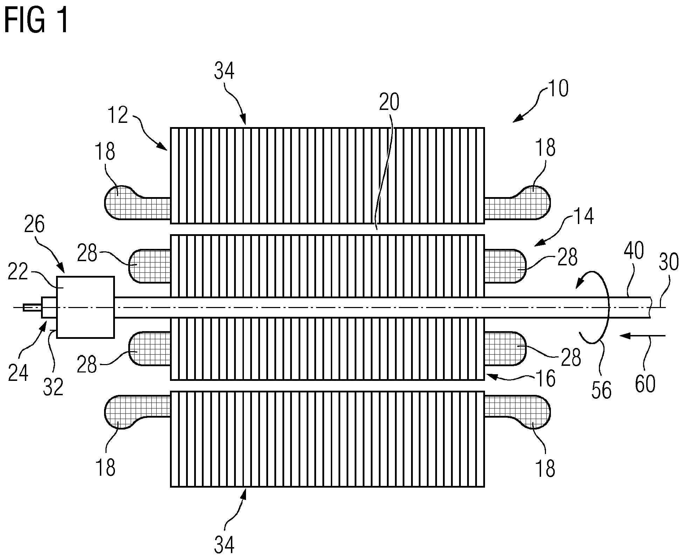

FIG 1 zeigt in einer schematischen Schnittdarstellung eine doppelt gespeiste Asynchronmaschine 10 als rotierende elektrische Maschine, die für einen Anschluss an ein dreiphasiges Wechselspannungsnetz ausgebildet ist und die einen Ständer 12 aufweist, der drehfest angeordnet ist. Der Ständer 12 weist eine nicht bezeichnete zentrale Durchgangsöffnung auf, in der ein Läufer 14 um eine Drehachse 30 drehbar gelagert angeordnet ist.

Der Ständer 12 weist ferner ein Ständerblechpaket 34 auf, in welchem durch in eine Umfangsrichtung 56 angeordnete, nicht dargestellte Zähne des Ständerblechpakets 34 Nuten ausgebildet sind, die sich im Wesentlichen parallel zur Drehachse 30 erstrecken. Bei alternativen Ausgestaltungen können die Zähne auch geschrägt angeordnet sein.

In den Nuten sind nicht dargestellte elektrische Leiter angeordnet. Die elektrischen Leiter bilden eine Ständerwicklung aus. Die Ständerwicklung ist somit im Ständerblechpaket 34 angeordnet. In FIG 1 sind von der Ständerwicklung in axialer Richtung 60 über das Ständerblechpaket 34 hinausragende Wicklungsköpfe 18 sichtbar. Der Schnitt in FIG 1 ist vorliegend ein Längsschnitt entlang der Drehachse 30 des Läufers 14, der vorliegend als fremdgespeister Läufer 14 ausgebildet ist und der in der nicht bezeichneten Durchgangsöffnung des Ständerblechpakets 34 angeordnet ist.

Der Läufer 14 ist in der Asynchronmaschine 10 drehbar angeordnet und über eine nicht weiter dargestellte Lagerung, die zum Beispiel durch Lagerschilde gebildet sein kann, gegenüber dem Ständer 12 in seiner axialen Position festgelegt. Im montierten Zustand ist zwischen dem Ständer 12 und dem Läufer 14 ein Luftspalt 20 ausgebildet.

Der Läufer 14 ist im bestimmungsgemäßen Betrieb der Asynchronmaschine 10 um die Drehachse 30 drehbar.

Der Läufer 14 weist ein Läuferblechpaket 16 auf, welches ebenfalls nicht dargestellte elektrische Leiter umfasst, die eine Läuferwicklung ausbilden. Die elektrischen Leiter sind vorliegend als Stäbe ausgebildet, die an den stirnseitigen Enden des Läuferblechpakets 16 jeweils einen Wicklungskopf 28 ausbilden.

Der Läufer 14 weist ferner eine Läuferwelle 40 auf, die zur mechanischen Verbindung mit einer rotierbaren mechanischen Einrichtung dient. Die rotierbare mechanische Einrichtung kann eine beliebige Funktion aufweisen, beispielsweise eine Antriebsfunktion für eine Industriemaschine, ein elektrisch antreibbares Kraftfahrzeug oder dergleichen. Darüber hinaus kann die mechanische Einrichtung natürlich auch eine Verbrennungskraftmaschine, ein Windrad und/oder dergleichen sein.

Je nach Betriebsart kann dem Läufer 14 mechanische Energie in Form einer Drehbewegung beziehungsweise eines Drehmoments zugeführt werden, sodass die Asynchronmaschine 10 in einem Generatormodus betrieben werden kann, um elektrische Energie bereitzustellen. Sie kann in einem Motorbetrieb über das an ihr angeschlossene elektrische Energieversorgungsnetz jedoch auch elektrische Energie beziehen und über den Läufer 14 und die Läuferwelle 40 ein Drehmoment bereitstellen.

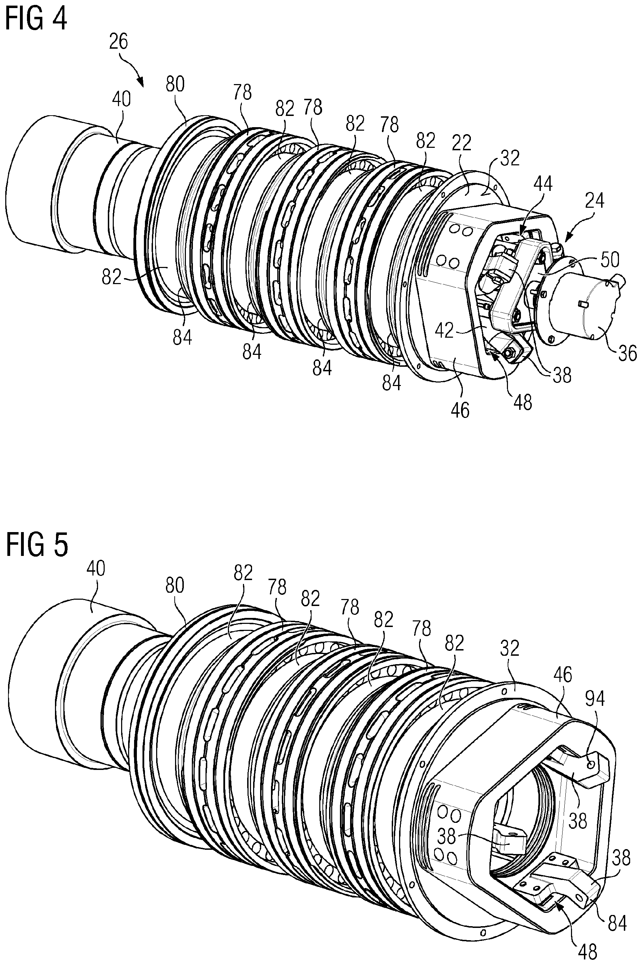

Aus FIG 1 ist ferner ersichtlich, dass an der Läuferwelle 40 die Läuferwicklung mit dem Läuferblechpaket 16 befestigt ist. An einem axialen Ende 26 der Läuferwelle 40, in FIG 1 im linken Bereich dargestellt, ist ein Schleifringkörper 22 befestigt. In axialer Richtung 60 anschließend ist eine Mitnehmereinheit 24 für einen Drehgeber 36 (FIG 4) angeordnet. Sowohl der Schleifringkörper 22 als auch die Mitnehmereinheit 24 sind drehfest mit der Läuferwelle 40 gekoppelt.

Die Mitnehmereinheit 24 ist vorliegend am axialen Ende 26 der Läuferwelle 40 befestigt. In alternativen Ausgestaltungen kann sie jedoch auch an einer Stirnseite 32 des Schleifringkörpers 22 befestigt sein, die an einem der Läuferwicklung zugewandten Ende gegenüberliegenden axialen Ende des Schleifringkörpers 22 ausgebildet ist. Wie im Folgenden beschrieben wird, ist die Läuferwicklung an den Schleifringkörper 22 angeschlossen, sodass im bestimmungsgemäßen Betrieb der Asynchronmaschine 10 die Läuferwicklung in vorgegebener Weise mit elektrischer Energie von einer läuferexternen Energiequelle beaufschlagt werden kann. Vorliegend ist hierfür ein Wechselrichter vorgesehen. Die Mitnehmereinheit 24 ermöglicht es, im mit dem Drehgeber 36 gekoppelten Zustand ein Sensorsignal bezüglich der Drehung des Läufers 14 bereitzustellen.

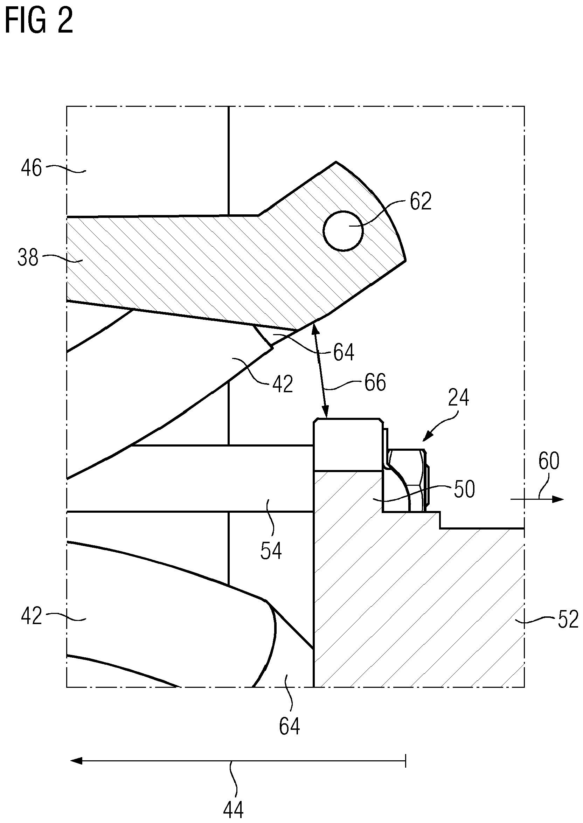

FIG 2 zeigt in einer schematischen Schnittdarstellung einen Ausschnitt eines Anschlussbereichs der Läuferwicklung an den Schleifringkörper 22 sowie die Mitnehmereinheit 24. Zu erkennen ist, dass der Anschlussbereich Anschlussadapter 38 für Leitungsenden 42 der Läuferwicklung bereitstellt, die in Richtung 60 über das axiale Ende 26 der Läuferwelle 40 hinausragen. Die Anschlussadapter 38 sind vorliegend Bestandteile des am Ende 26 der Läuferwelle 40 drehfest mit der Läuferwelle 40 gekoppelten Schleifringkörpers 22.

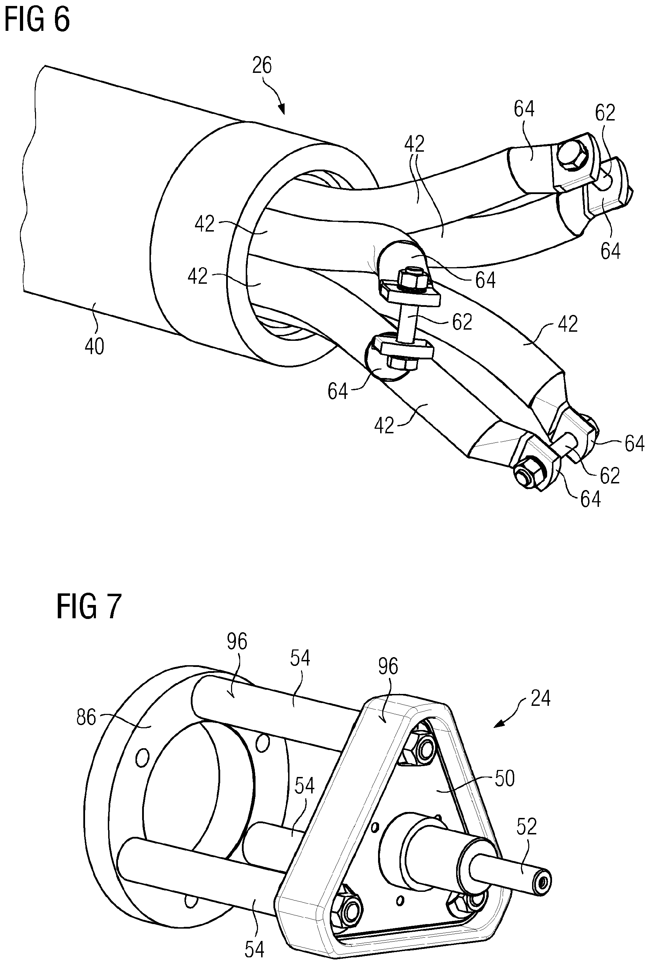

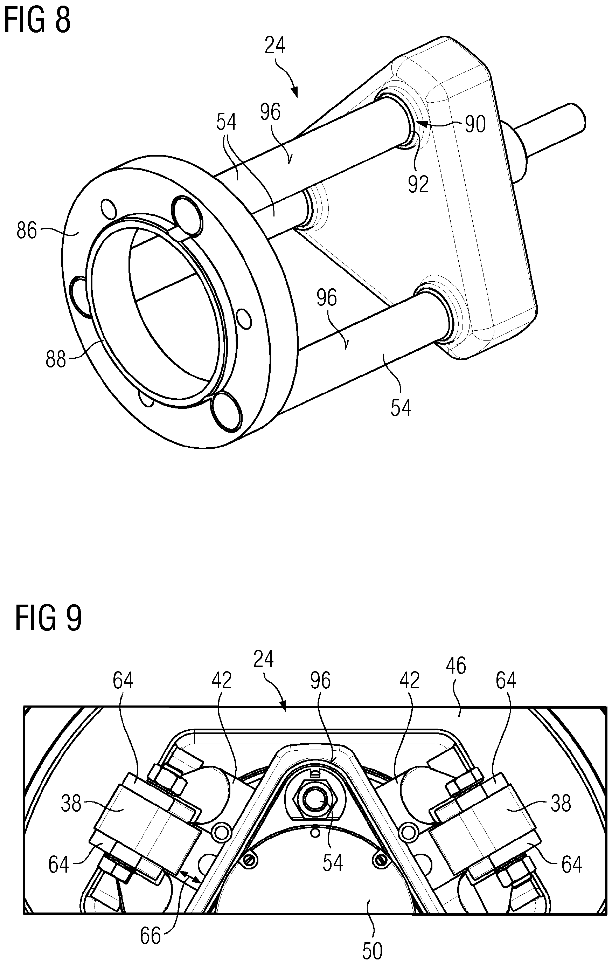

An den Anschlussadaptern 38 sind jeweilige Leitungsenden 42 der Läuferwicklung mittels einer jeweiligen Befestigungsschraube 62 befestigt. Zum Zwecke der Befestigung der Leitungsenden weisen diese endseitig jeweilige Kabelschuhe 64 auf, sodass eine zuverlässige und elektrisch gut leitfähige Verbindung mit dem jeweiligen Anschlussadapter 38 erreicht werden kann (FIG 6, 9). Sowohl die Anschlussadapter 38 als auch die Kabelschuhe 64 sind aus einem elektrisch gut leitenden Werkstoff gebildet, vorliegend eine Kupferlegierung. Je nach Konstruktion kann hier jedoch auch eine andere Legierung eingesetzt werden, die eine entsprechende gute elektrische Leitfähigkeit bereitstellt.

Aus FIG 2 ist ferner ersichtlich, dass die Mitnehmereinheit 24 in Richtung 60 der Drehachse 30 der Läuferwelle 40 auf etwa gleicher Höhe mit den Anschlussadaptern 38 in einem Teilbereich 44 angeordnet ist. Der Teilbereich 44 erstreckt sich vorliegend vom axialen Ende 26 der Läuferwelle 40 bis zur Erstreckung der Anschlussadapter 38 in Richtung 60. In alternativen Ausgestaltungen kann sich der Teilbereich 44 jedoch von der Stirnseite 32 des Schleifringkörpers 22 bis zur Erstreckung der Anschlussadapter 38 in Richtung 60 erstrecken.

Mit dem Bezugszeichen 66 ist vorliegend schematisch eine Luftstrecke dargestellt, die den kleinsten Abstand zwischen dem Anschlussadapter 38 und der Mitnehmereinheit 24 zeigt. Unter den vorliegenden realen konstruktiven Bedingungen reicht die Luftstrecke 66 im bestimmungsgemäßen Betrieb der Asynchronmaschine 10 nicht aus, um die Anforderungen hinsichtlich der elektrischen Sicherheit erfüllen zu können. Da die Mitnehmereinheit 24 vorliegend aus einem Stahl gebildet ist, also eine gute elektrische Leitfähigkeit aufweist, besteht die Gefahr, dass der Drehgeber 36 mit einer unzulässig hohen elektrischen Spannung beaufschlagt wird. Darüber hinaus kann natürlich das Problem auftreten, dass die Läuferwelle 40, die vorliegend ebenfalls aus einem Stahl gebildet ist, im bestimmungsgemäßen Betrieb der Asynchronmaschine 10 ebenfalls aufgrund der zu kleinen Luftstrecke 66 mit elektrischer Spannung beaufschlagt werden kann. Die Konstruktion gemäß FIG 2 ergibt sich, weil die axiale Längserstreckung des Läufers 14 möglichst reduziert werden soll. Es ist daher vorteilhaft, wenn die Mitnehmereinheit 24 in den Anschlussbereich der Anschlussadapter 38 mit den Leitungsenden 42 hineinragt. Dadurch könnte die axiale Erstreckung des Läufers 14 reduziert werden.

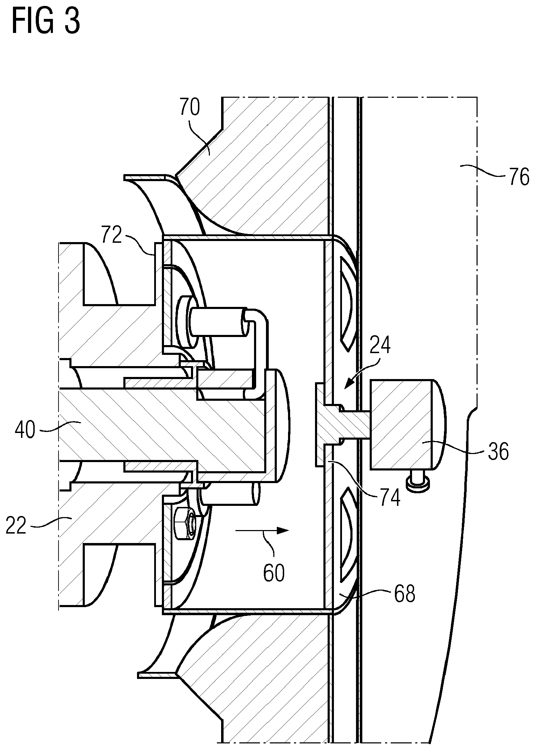

FIG 3 zeigt in einer schematischen Schnittdarstellung eine weitere Ausgestaltung für ein axiales Ende eines Läufers 14, der im Bereich seines axialen Endes zusätzlich einen Lüfter 68 aufweist. Der Lüfter 68 ist bei dieser Ausgestaltung an einem Flansch 72 befestigt, der an der Stirnseite 32 des Schleifringkörpers 22 befestigt ist. Der Lüfter 68 weist Schaufeln 70 auf, mittels denen eine Luftströmung in vorgegebener Weise im bestimmungsgemäßen Betrieb der Asynchronmaschine 10 erreicht werden kann.

An einem weiteren Flansch 74, der in Richtung 60 dem Flansch 72 gegenüberliegt, ist die Mitnehmereinheit 24 mit dem Lüfter 68 verbunden. Aus FIG 3 ist ferner ersichtlich, dass die Mitnehmereinheit 24 den Drehgeber 36 mechanisch koppelt. Der Drehgeber 36 ist an einem Maschinengehäuse 76 der Asynchronmaschine 10 drehfest befestigt, welches auch den Ständer 12 umfasst.

Bei der Konstruktion gemäß FIG 3 tritt das Problem hinsichtlich der elektrischen Isolation, wie es anhand von FIG 2 erläutert worden ist, nicht auf. Jedoch erweist sich diese Konstruktion hinsichtlich der größeren axialen Erstreckung des Läufers 14 als nachteilig. Darüber hinaus kann das Problem auftreten, dass die Mitnehmereinheit 24 im bestimmungsgemäßen Betrieb nicht zu vernachlässigende Rotationsschwingungen ausführt, die zu Problemen bei der Kopplung des Drehgebers 36 führen können. Derartige Probleme können mit der Konstruktion gemäß FIG 2 vermieden werden.

Eine Konstruktion, die die Konstruktion gemäß FIG 2 weiterbildet und die zuvor genannten Probleme vermeidet, ist anhand von FIG 4 in einer schematischen perspektivischen Darstellung gezeigt. In FIG 4 ist das axiale Ende 26 der Läuferwelle 40 vergrößert dargestellt. Am axialen Ende 26 der Läuferwelle 40 ist der Schleifringkörper 22 angeordnet, der drehfest und auch in axialer Richtung mit der Läuferwelle 40 gekoppelt ist.

Wie aus FIG 4 ersichtlich ist, weist der Schleifringkörper 22 durch Isolationsringe 82 beabstandet angeordnete Schleifringflächen 80 - auch Schleifringe genannt - auf, die im montierten Zustand durch drehfest angeordnete elektrische Kontaktbürsten (nicht dargestellt) kontaktiert werden, um den Läufer 14 im bestimmungsgemäßen Betrieb der Asynchronmaschine 10 und insbesondere seine Läuferwicklung mit der elektrischen Energie beaufschlagen zu können.

Läuferwicklungsseitig ist ferner ein Schleifring 80 am Schleifringkörper 22 angeordnet, der ebenfalls über einen Isolationsring 82 von dem benachbart angeordneten Schleifring 78 elektrisch isoliert angeordnet ist. Der Schleifring 80 ist in elektrischer Verbindung mit der Läuferwelle 40. Der Schleifring 80 dient dazu, die Läuferwelle 40 mit einem Bezugspotential, vorliegend ein Erdpotential, verbinden zu können.

Die Schleifringe 78, 80 sind aus einem elektrisch gut leitfähigen Werkstoff ausgebildet, vorliegend aus einem geeigneten Edelstahl. Die Isolationsringe 82 sind aus einem elektrisch isolierenden Werkstoff ausgebildet, der vorliegend durch einen Kunststoff wie zum Beispiel Bakelit oder dergleichen gebildet sein kann. Der Schleifringkörper 22 selbst ist aus einem ebenfalls elektrisch nicht leitfähigen Werkstoff gebildet, und ist mit den Schleifringen 78, 80 sowie den Isolationsringen 82 mechanisch fest verbunden. Je nach Ausgestaltung kann vorgesehen sein, dass der Schleifringkörper 22 auch einstückig mit den Isolationsringen 82 ausgebildet sein kann. Um Kriechstrecken an der äußeren Oberfläche der Isolationsringe 82 zu vergrößern, weisen diese jeweilige umlaufende radial hervorstehende Vorsprünge 84 auf. Je nach Bedarf können zusätzliche Konturen vorgesehen sein, um Kriechstrecken zu vergrößern.

An der Stirnseite 32 des Schleifringkörpers 22 ist ein Fliehkraftstützring 46 mit einer Durchgangsöffnung 48 angeordnet, der ebenfalls aus einem elektrisch isolierenden Werkstoff gebildet ist. Der Fliehkraftstützring 46 ist vorliegend aus einem geeigneten Kunststoff gebildet, der eine Faserverstärkung aufweist. Mittels des Fliehkraftstützrings 46 werden Anschlussadapter 38 des Schleifringkörpers 22 gegen einwirkende Fliehkräfte gestützt (FIG 5), die mit jeweiligen der Schleifringe 78 elektrisch gekoppelt sind. Dadurch können die Schleifringe 78 mit jeweiligen Leitungsenden 42 der Läuferwicklung elektrisch verbunden werden.

Die Leitungsenden 42 der Läuferwicklung sind durch die Läuferwelle 40, und zwar in einer Öffnung der Läuferwelle 40, zum axialen Ende 26 der Läuferwelle 40 geführt. Die Läuferwelle 40 ist zu diesem Zweck zumindest teilweise als Hohlwelle ausgebildet (FIG 6).

Der Fliehkraftstützring 46 ist vorliegend mittels einer Schraubverbindung mit dem Schleifringkörper 22 an der Stirnseite 32 befestigt. Zu diesem Zweck weist der Schleifringkörper 22 eine Durchgangsöffnung auf, durch die er zugleich auch auf das axiale Ende 26 der Läuferwelle 40 aufgesteckt werden kann. Stirnseitig ist ein Innengewinde vorgesehen, welches dazu ausgebildet ist, ein axial ausgebildetes Außengewinde des Fliehkraftstützrings 46 aufzunehmen, um dadurch eine mechanische Verbindung herzustellen. Alternativ kann der Fliehkraftstützring 46 auch mittels einer stoffschlüssigen Verbindung mit dem Schleifringkörper 22 verbunden sein, beispielsweise mittels einer Klebverbindung oder dergleichen.

Der Fliehkraftstützring 46 kann in alternativen Ausgestaltungen dem Grunde nach auch einstückig mit dem Schleifringkörper 22 ausgebildet sein.

Aus FIG 4 ist ersichtlich, dass die Mitnehmereinheit 24 gemäß FIG 2 angeordnet ist. Bei der dort vorgesehenen Anordnung ist vorgesehen, dass die Mitnehmereinheit 24 zumindest im Teilbereich 44, der in Richtung 60 der Drehachse 30 der Läuferwelle 40 auf etwa gleicher Höhe mit den Anschlussadaptern 38 angeordnet ist, gegenüber den Anschlussadaptern 38 elektrisch isoliert ist. Zu diesem Zweck ist die Mitnehmereinheit 24 gemäß der Figuren 7 und 8 ausgebildet. Die Figuren 7 und 8 stellen jeweilige schematisch perspektivische Darstellungen der Mitnehmereinheit 24 dar, wie sie in FIG 4 zum Einsatz kommt. FIG 5 zeigt eine schematische Darstellung wie FIG 4, bei der die Mitnehmereinheit 24 und die Leitungsenden 42 nicht dargestellt sind.

Aus FIG 7 ist ersichtlich, dass die Mitnehmereinheit 24 teilweise einen elektrisch isolierenden Werkstoff aufweist. Die Mitnehmereinheit 24 umfasst eine Halteplatte 50 mit einem Mitnehmerzapfen 52 zum Verbinden mit dem Drehgeber 36 und drei Befestigungsbolzen 54 zum Befestigen an der Stirnseite 32 des Schleifringkörpers 22. Die Halteplatte 50 und die Befestigungsbolzen 54 sind in dieser Ausgestaltung aus einem Stahl gebildet.

Vorliegend ist vorgesehen, dass die Befestigungsbolzen 54 endseitig ein mittels einer Nietverbindung oder einem Pressverband an einem Befestigungsring 86 befestigt sind, welcher Befestigungsring 86 an der Stirnseite 32 des Schleifringkörpers 22 befestigt werden kann. Zu diesem Zweck ist ein in axialer Richtung 60 hervorstehender Zentriervorsprung 88 radial innen am Befestigungsring 86 vorgesehen, der gegenüberliegend zu dem Befestigungsbolzen 54 am Befestigungsring 86 ausgebildet ist. Dadurch kann der Befestigungsring 86 und somit auch die Mitnehmereinheit 24 gegenüber der Läuferwelle 40 zentriert angeordnet werden, sodass dem bestimmungsgemäßen Betrieb eine hohe Genauigkeit in Bezug auf die Zentrierung des Mitnehmerzapfens 52 gegenüber der Läuferwelle 40 und insbesondere ihrer Drehachse 30 erreicht werden kann.

Aus den Figuren 7 und 8 ist ferner ersichtlich, dass die Halteplatte 50 mittels einer Schraubbefestigung an den Befestigungsbolzen 54 befestigt ist. Die Halteplatte 50 ist vorliegend mit einer im Wesentlichen dreieckförmigen Kontur ausgebildet, wobei in Bereichen der jeweiligen Eckpunkte nicht bezeichnete Öffnungen vorgesehen sind, durch die axial hervorstehende Gewindezapfen der Befestigungsbolzen 54 hindurchragen, die mittels jeweiliger Muttern versehen sind, um die Befestigungsbolzen 54 mit der Halteplatte 50 zuverlässig zu verbinden. Aus den Figuren 7 und 8 ist ferner ersichtlich, dass die Halteplatte 50 sowie auch die Befestigungsbolzen 54 eine Beschichtung 96 aus einem elektrisch isolierenden Werkstoff aufweist, der vorliegend ein Kunststoff ist. Der Kunststoff ist in dieser Ausgestaltung als Lackierung mittels eines bekannten Verbindungsverfahrens auf die Oberflächen der Befestigungsbolzen 54 sowie die äußeren Oberflächen der Halteplatte 50 aufgebracht. In einer alternativen Ausgestaltung kann für die Befestigungsbolzen 54 sowie der Halteplatte 50 auch ein jeweiliges Formteil aus Kunststoff vorgesehen sein, welches auf den jeweiligen Befestigungsbolzen 54 oder der Halteplatte 50 aufgesteckt und mittels eines Harzes mit diesem verbunden ist. Darüber hinaus kann der Kunststoff auch mittels eines Spritzverfahrens auf den Befestigungsbolzen 54 und der Halteplatte 50 aufgebracht werden.

Aus FIG 8 ist eine dem Schleifringkörper 22 zugewandte Unterseite der Halteplatte 50 ersichtlich. Zu erkennen ist eine Fügestelle 90, an der einer der Befestigungsbolzen 54 mit der Halteplatte 50 verbunden ist. An der Fügestelle 90 ist ferner umlaufend ein Harz 92 als Isolationswerkstoff angebracht, um im Übergang vom Befestigungsbolzen 54 zur Halteplatte 50 die elektrische Isolation zu gewährleisten. Dies ist für sämtliche der Befestigungsbolzen 54 gleich ausgeführt.

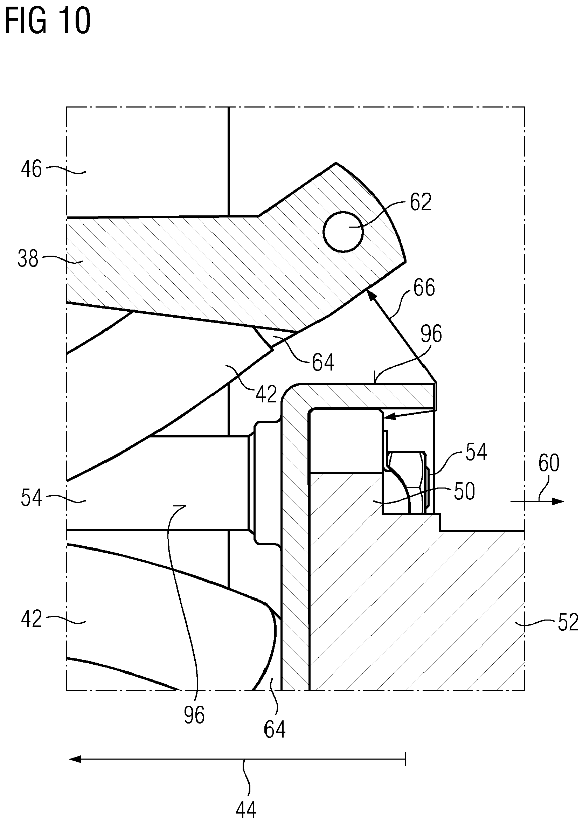

Durch geeignete Wahl des die Beschichtung 96 bildenden Kunststoffs sowie der Schichtdicke kann erreicht werden, dass die Kriech- und Luftstrecken eingehalten werden, wie dies im Folgenden noch anhand der Figuren 9 und 10 erläutert wird.

FIG 6 zeigt das axiale Ende 26 der Läuferwelle 40 ohne den Schleifringkörper 22, jedoch mit den Leitungsenden 42 der Läuferwicklung. Zu erkennen ist, dass die Leitungsenden 42 paarweise miteinander verbunden sind. Zu diesem Zweck weist jedes der Leitungsenden 42 einen jeweiligen Kabelschuh 64 auf, wobei jeweils zwei der Kabelschuhe 64 mittels einer Befestigungsschraube 62 miteinander verbunden sind. Im vorliegenden Fall sind sechs Leitungsenden 42 vorgesehen, die jeweils paarweise miteinander elektrisch verbunden sind. Daraus ergibt sich, dass es sich bei der Läuferwicklung um eine dreiphasige Läuferwicklung handelt, die in Dreiecksschaltung verschaltet ist.

Aus FIG 5 ist ersichtlich, dass die Anschlussadapter 38 jeweilige Durchgangsbohrungen 94 aufweisen, die zur Aufnahme der Befestigungsschrauben 62 dienen. FIG 4 zeigt die Anschlussadapter 38 und die Kabelschuhe 64 im montierten Zustand.

FIG 9 zeigt nun in einer schematischen Draufsicht einen Ausschnitt auf das axiale Ende 26 gemäß FIG 4. Zu erkennen ist, dass die Mitnehmereinheit 24 sehr nahe an die Kabelschuhe 64 und die Anschlussadapter 38 angeordnet werden kann. In FIG 9 ist schematisch ein Abstand einer Luftstrecke 66 dargestellt, die ohne die isolierende Beschichtung 96 der Halteplatte 50 und der Befestigungsbolzen 54 eine nicht ausreichende elektrische Isolation zur Folge hätte. Durch die Beschichtung 96 kann jedoch erreicht werden, dass die durch die Beschichtung 96 bereitgestellte zusätzliche elektrische Isolation in Zusammenhang mit der in FIG 9 dargestellten Luftstrecke 66 die elektrische Isolation zuverlässig gewährleistet werden kann.

FIG 10 zeigt den Bereich aus FIG 9 in einer Schnittdarstellung der Mitnehmereinheit 24 im unteren Bereich der FIG 9. Zu erkennen ist, dass die Luftstrecke 66 durch die elektrische Isolation, die durch die Beschichtung 96 erreicht wird, entsprechend verlängert wird.

Aus FIG 10 ist ferner der Teilbereich 44 ersichtlich, der in Richtung 60 der Drehachse 30 der Läuferwelle 40 auf gleicher Höhe mit den Anschlussadaptern 38 angeordnet ist. Der Teilbereich 44 erstreckt sich von axialen Enden der Anschlussadapter 38 bis zum axialen Ende 26 der Läuferwelle 40, welches vorliegend auch mit der Stirnseite 32 des Schleifringkörpers 22 zusammenfällt. In alternativen Ausgestaltungen kann er dies natürlich auch variieren. Durch diese Konstruktion ist es möglich, die axiale Erstreckung des Läufers 14 zu reduzieren.

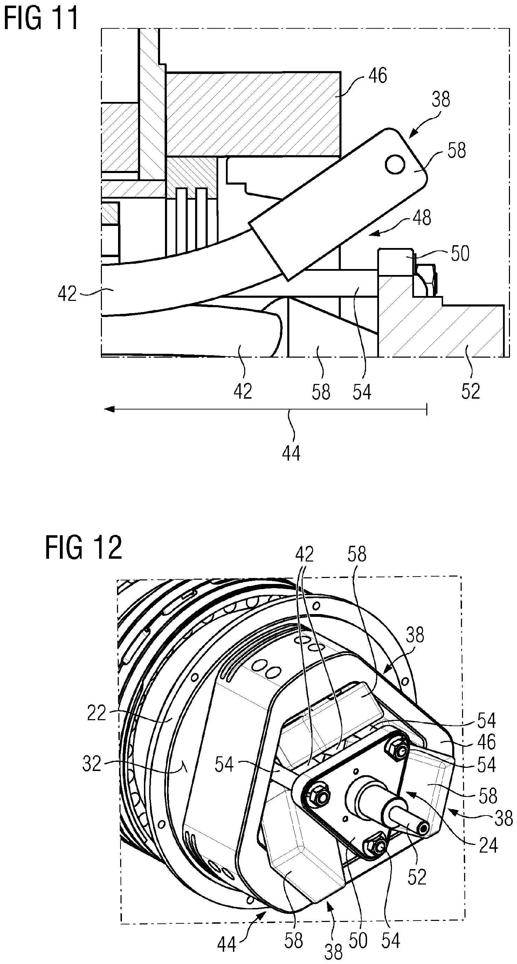

Die Figuren 11 und 12 zeigen nun eine weitere Ausgestaltung, bei der die elektrische Isolation nunmehr nicht durch die Mitnehmereinheit 24, sondern stattdessen durch die Anschlussadapter 38 bereitgestellt ist. Diese Ausgestaltung kann natürlich auch mit der zuvor beschriebenen Ausgestaltung kombiniert werden.

FIG 12 zeigt in einer schematisch perspektivischen Darstellung wie FIG 4 das axiale Ende der Läuferwelle 40 mit dem Schleifringkörper 22, wie es bereits zur FIG 4 erläutert wurde, weshalb diesbezüglich auf die entsprechenden Ausführungen verwiesen wird. An der Stirnseite 32 ist - wie bereits zur FIG 4 erläutert - der Fliehkraftstützring 46 befestigt.

Im Unterschied zur Ausgestaltung gemäß FIG 4 ist bei dieser Ausgestaltung die Mitnehmereinheit 24 vollständig aus einem Metall, hier vorliegend Stahl, gebildet. Eine elektrische Isolierung, insbesondere eine Beschichtung, ist bei der Mitnehmereinheit 24 vorliegend nicht vorgesehen. Die mechanische Ausgestaltung der Mitnehmereinheit 24 entspricht jedoch im Wesentlichen der Ausgestaltung, wie sie bereits anhand der Figuren 7 und 8 erläutert wurde, weshalb diesbezüglich auf die entsprechenden Ausführungen verwiesen wird. Lediglich die Beschichtung ist bei der Mitnehmereinheit 24 gemäß der Figuren 11 und 12 nicht vorgesehen.

In der Ausgestaltung gemäß der Figuren 11 und 12 ist vorgesehen, dass die elektrische Isolierung durch jeweilige Hülsen 58 realisiert ist, die auf die Anschlussadapter 38 mit den an diesen angeschlossenen Kabelschuhen 64 aufgesteckt sind. Die Hülsen 58 sind aus einem geeigneten Kunststoffmaterial gebildet und mittels einer Rastverbindung an den jeweiligen Anschlussadaptern 38 verrastet, sodass sie im bestimmungsgemäßen Betrieb der Asynchronmaschine 10 festgelegt sind. Die Hülsen 58 stellen hierdurch eine geeignete elektrische Isolation bereit, sodass die Kriech- und Luftstrecken im bestimmungsgemäßen Betrieb der Asynchronmaschine 10 eingehalten werden können, und zwar insbesondere auch in Bezug auf die Mitnehmereinheit 24. Die weiteren Details entsprechen im Wesentlichen dem, was bereits zu den vorhergehenden Figuren erläutert worden ist. Die FIG 11 zeigt schematisch eine Schnittansicht durch den in FIG 12 dargestellten oberen Bereich, wobei der Schnitt in axialer und radialer Richtung ist.

Mit der Erfindung kann insgesamt erreicht werden, dass die Integrationsdichte am axialen Ende 26 der Läuferwelle 40 erhöht werden kann, sodass die Abmessungen der Asynchronmaschine 10, insbesondere ihres Läufers 14, reduziert werden können. Durch das Anbringen von elektrisch isolierendem Material können Kriech- und Luftstrecken zwischen leitenden Materialien erhöht werden, wodurch entsprechend Bauraum eingespart werden kann, weil Abstände zu elektrisch leitfähigen Teilen reduziert werden können. Insbesondere können Luftstrecken somit zielverlängert und/oder beliebig gestaltet werden. Es ist auch möglich, stromführende Teile, getrennt durch Isolationsmaterial unmittelbar kontaktierend zu verlegen, wodurch eine weitere Reduzierung des Bauraums erreicht werden kann.

Die Erfindung erlaubt es somit, spannungsführende Teile enger zueinander zu positionieren, das heißt, die elektrische Isolation wird vorzugsweise derart ausgebildet, dass die Luftstrecken durch eine konstruktive Gestaltung der Isolation verlängert werden können. Insbesondere können somit normgerechte Abstände erreicht werden, wobei zugleich der Bauraum reduziert beziehungsweise optimiert gestaltet werden kann, weil die Luftstrecken konstruktionsbedingt verlängert werden können.

Durch Anbringen eines Isolationsmaterials beziehungsweise eines Isolationswerkstoffs an der Mitnehmereinheit wird es insbesondere ermöglicht, Abstände von stromführenden Teilen zueinander zu reduzieren, um Platz und Bauraum einzusparen. Das Isolationsmaterial wird vorzugsweise an kritischen Punkten der Mitnehmereinheit angebracht, beispielsweise als Beschichtung, und kann so dazu führen, dass Luftstrecken verlängert werden können. Daher können einzelne Bauteile, auch spannungsführende Bauteile, Kontakt mit dem Isolationsmaterial der Mitnehmereinheit haben, ohne dass gefährliche Zustände auftreten können.

Die Ausführungsbeispiele dienen ausschließlich der Erläuterung der Erfindung und sollen diese nicht beschränken. Sie können auch miteinander kombiniert werden. Insbesondere ist die Erfindung natürlich nicht auf Innenläufer beschränkt und kann gleichermaßen auch bei Außenläufern eingesetzt werden.

## Patentansprüche

1. Läufer (14) für eine rotierende elektrische Maschine (10), mit:
- einer Läuferwelle (40),
- einer an der Läuferwelle (40) drehfest angeordneten Läuferwicklung (28),
- einem an einem axialen Ende (26) der Läuferwelle (40) angeordneten Schleifringkörper (22), wobei eine Stirnseite (32) des Schleifringkörpers (22) an einem der Läuferwicklung (28) gegenüberliegenden axialen Ende des Schleifringkörpers (22) ausgebildet ist, und
- einer Mitnehmereinheit (24) für einen gegenüber dem Läufer (14) drehfest angeordneten Drehgeber (36), die an der Stirnseite (32) des Schleifringkörpers (22) und/oder am axialen Ende (26) der Läuferwelle (40) befestigt ist,
**dadurch gekennzeichnet, dass**
- der Schleifringkörper (22) Anschlussadapter (38) aufweist, die über die Stirnseite (32) des Schleifringkörpers (22) axial hinausragen und an denen Leitungsenden (42) der Läuferwicklung (28) angeschlossen sind, und
- wobei die Mitnehmereinheit (24) zumindest in einem Teilbereich (44), der in Richtung einer Drehachse (30) der Läuferwelle (40) auf gleicher Höhe mit den Anschlussadaptern (38) angeordnet ist, gegenüber den Anschlussadaptern (38) elektrisch isoliert ist.

2. Läufer nach Anspruch 1, **gekennzeichnet durch** einen Fliehkraftstützring (46) mit einer Durchgangsöffnung (48), der an der Stirnseite (32) des Schleifringkörpers (22) derart angeordnet ist, dass die Anschlussadapter (38) und die Mitnehmereinheit (24) zumindest teilweise in der Durchgangsöffnung (48) des Fliehkraftstützrings (46) angeordnet sind.

3. Läufer nach einem der vorhergehenden Ansprüche, **dadurch gekennzeichnet, dass** die Mitnehmereinheit (24) zumindest teilweise einen elektrisch isolierenden Werkstoff aufweist.

4. Läufer nach Anspruch 3, **dadurch gekennzeichnet, dass** der elektrisch isolierende Werkstoff zumindest teilweise eine Beschichtung der Mitnehmereinheit (24) ausbildet.

5. Läufer nach Anspruch 3 oder 4, **dadurch gekennzeichnet, dass** die Mitnehmereinheit (24) eine Halteplatte (50) mit einem Mitnehmerzapfen (52) zum Verbinden mit dem Drehgeber (36) und wenigstens einem Befestigungsbolzen (54) zum Befestigen an der Stirnseite (32) des Schleifringkörpers (22) und/oder am axialen Ende (26) der Läuferwelle (40) aufweist, wobei die Halteplatte (50) und der wenigstens eine Befestigungsbolzen (54) elektrisch isoliert ausgebildet sind.

6. Läufer nach Anspruch 5, **dadurch gekennzeichnet, dass** die Halteplatte (50) und/oder der wenigstens eine Befestigungsbolzen (54) aus einem elektrisch isolierenden Werkstoff gebildet sind.

7. Läufer nach Anspruch 5, **dadurch gekennzeichnet, dass** die Halteplatte (50) und/oder der wenigstens eine Befestigungsbolzen (54) mit einem elektrisch isolierenden Werkstoff beschichtet sind.

8. Läufer nach einem der vorhergehenden Ansprüche, **dadurch gekennzeichnet, dass** die Anschlussadapter (38) eine elektrische Isolierung aufweisen.

9. Läufer nach Anspruch 8, **dadurch gekennzeichnet, dass** die elektrische Isolierung zumindest teilweise durch eine Hülse (60) aus einem elektrisch isolierenden Werkstoff gebildet ist.

10. Rotierende elektrische Maschine (10) mit einem Ständer (12) und einem in einer Öffnung des Ständers (12) drehbar gelagert angeordneten Läufer (14), **gekennzeichnet durch** einen Läufer (14) nach einem der vorhergehenden Ansprüche.
